# EUROPÄISCHE PATENTSCHRIFT

(11) **EP 0 514 669 B1**
(45) Veröffentlichungstag und Bekanntmachung des Hinweises auf die Patenterteilung: **08.03.1995**
(21) Anmeldenummer: 92106713.8
(22) Anmeldetag: 18.04.1992
(51) Int. Cl.: H02G 1/08

(54) **Verfahren zum Herstellen eines Zugankers**
Process for manufacturing pulling means
Procédé de fabrication de dispositifs de tirage

(30) Priorität: 24.05.1991 DE 4116973
(43) Veröffentlichungstag der Anmeldung: 25.11.1992
(73) Patentinhaber: KABEL RHEYDT Aktiengesellschaft, D-41179 Mönchengladbach (DE)
(72) Erfinder: Delâge, Peter, Dipl.-Ing., W-4053 Jüchen 5 (DE); Böhme, Ralph, Dipl.-Ing., W-4050 Mönchengladbach 2 (DE); Girbig, Reinhard, Dipl.-Ing., W-4050 Mönchengladbach (DE); Moers, Herbert, Dipl.-Ing., W-4052 Korschenbroich 1 (DE)
(74) Vertreter: Mende, Eberhard, Dipl.-Ing.

(56) Entgegenhaltungen:
- EP-A- 0 280 255
- EP-A- 0 316 535
- DE-U- 8 708 258

## Beschreibung

Die Erfindung betrifft ein Verfahren nach dem Oberbegriff des Anspruchs 1. Ein auf diese Weise hergestellter Zuganker wird insbesondere für Lichtwellenleiterkabel zum Einziehen der Kabel mittels eines Zugseiles in Kabelschächte oder zum Abziehen des Kabels von der Kabelrolle verwendet. Die Verbindung zwischen dem Zuganker und dem Kabel muß hierbei so ausgebildet sein, daß die Zugkraft sich einigermaßen symmetrisch auf das Kabel verteilt. Die bisher bekannten Zuganker werden bei Kabeln mit kreisförmigem Querschnitt eingesetzt. Sie sind daher kein Vorbild für Zuganker von Flachkabeln. Ein Zuganker fär Flachkabel ist in der DE-U-87 08 258 beschrieben.

Der Erfindung liegt die Aufgabe zugrunde, ein Verfahren zum Herstellen eines Zugankers der eingangs genannten Art zu schaffen, welcher zum Ziehen eines Flachkabels mit Zugentlastungselementen geeignet ist. Diese Aufgabe wird bei einem Verfahren der eingangs erwähnten Art nach der Erfindung durch die im Kennzeichen aufgeführten Merkmale gelöst. Weiterbildungen der Erfindung sind in den Unteransprüchen beschrieben.

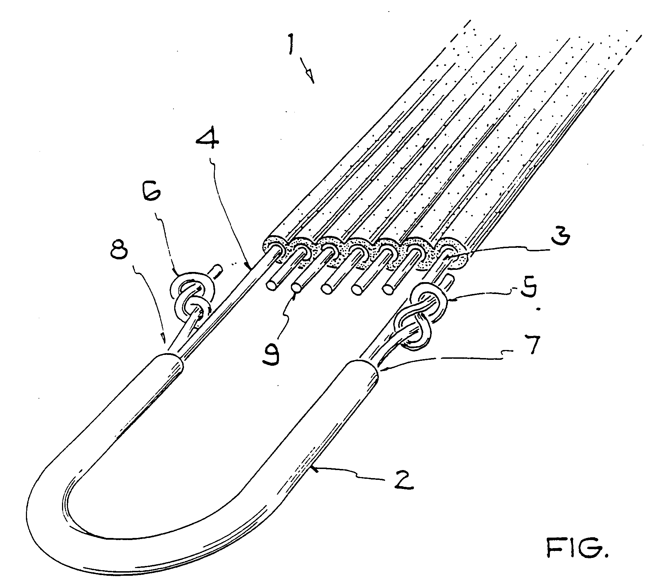

Die Erfindung wird bei Flachkabeln eingesetzt, welche zwei symmetrisch angeordnete Zugentlastungselemente aufweisen. Diese Zugentlastungselemente werden von dem übrigen Flachkabel abgesetzt und allein zum Herstellen der Zugöse verwendet. Ein Ausführungsbeispiel der Erfindung wird nachstehend anhand der Zeichnung naher erläutert; dabei zeigt die Figur ein Flachkabel 1 mit Zugentlastungselementen 3 und 4 sowie Adern 9. Die Zugentlastungselemente sind durch die Öffnungen des Stahlrohrs 2 durchgezogen und am Ende beispielsweise mit einem Achter-Knoten 5 bzw. 6 verstärkt, so daß sie nicht mehr durch das Stahlrohr 2 zurückrutschen können. Wenn die Zugentlastungselemente beispielsweise einen Aussendurchmesser von vier Millimetern aufweisen, besitzt das Stahlrohr einen Innendurchmesser von 10 Millimetern. Das Stahlrohr ist vorzugsweise aus Edelstahl gefertigt und hat eine Wandstärke, die es erlaubt, das Flachkabel von einer Rolle abzuziehen und eventuell auch noch durch ein Leerrohr zu ziehen, ohne daß sich die Zugöse dabei nennenswert verbiegt. Achter-Knoten 5, 6 sind aus der seemännischen Praxis bekannt und lassen sich nach dem Einziehen des Flachkabels wieder leicht lösen, so daß die Einziehöse bzw. der Zuganker, welcher hauptsächlich aus dem Stahlrohr 2 besteht, entfernt werden kann. Statt die Enden der Zugentlastungselemente 3 und 4 durch einen Knoten festzulegen, kann man auch Klemmen benutzen, die jeweils das Zurückrutschen der Enden durch die Öffnungen 6 und 7 im Stahlrohr 2 verhindern.

## Patentansprüche

1. Verfahren zum Herstellen eines Zugankers für ein Flachkabel (1), **dadurch gekennzeichnet**, daß die Zugentlastungselemente des Flachkabels durch ein U-förmig gebogenes Rohr (2) gezogen werden, dessen Eintrittsöffnungen (7, 8) im Abstand der Zugentlastungselemente (3,4) des Flachkabels (1) angeordnet sind, und daß die Zugentlastungselemente (3,4) nach dem Durchziehen durch das Rohr (2), gegen das Zurückgleiten im Stahlrohr (2) gesichert werden.

2. Verfahren nach Anspruch 1, dadurch gekennzeichnet, daß die Zugentlastungselemente an ihren Enden mit Achter-Knoten (5, 6) versehen werden.

3. Verfahren nach Anspruch 1, dadurch gekennzeichnet, daß die Zugentlastungselemente (3,4) an ihrem Ende mit dem jeweils anderen Zugentlastungselement verbunden werden.

4. Verfahren nach Anspruch 3, dadurch gekennzeichnet, daß die Zugentlastungselemente mit einer Klemme verbunden werden.

5. Verfahren nach einem der Ansprüche 1 bis 4, dadurch gekennzeichnet, daß die Zugentlastungselemente aus einem flexiblen, glasfaserverstärkten Kunststoff bestehen.

## Claims

1. Method for producing a tension anchor for a ribbon cable (1), characterized in that the tension relief elements of the ribbon cable are drawn through a tube (2), bent in U-shape, whose entrance openings (7, 8) are arranged at a distance from the strain relief elements (3, 4) of the ribbon cable (1), and in that the strain relief elements (3, 4), after being drawn through the tube (2), are secured against sliding back in the steel tube (2).

2. Method according to Claim 1, characterized in that the strain relief elements are provided at their ends with figure-of-eight knots (5, 6).

3. Method according to Claim 1, characterized in that the strain relief elements (3, 4) are connected at their end to the respectively other strain relief element.

4. Method according to Claim 3, characterized in that the strain relief elements are connected to a clamp.

5. Method according to one of Claims 1 to 4, characterized in that the strain relief elements consist of a flexible, glass-fibre-reinforced plastic.

## Revendications

1. Procédé de fabrication d'une poignée de tirage pour un câble plat, caractérisé par le fait que l'on tire les éléments de décharge de traction du câble plat à travers un tube (2) cintré en forme de U dont les ouvertures d'entrée (7, 8) sont disposées à l'écartement des éléments (3, 4) de décharge de traction du câble plat (1) et qu'après les avoir tirés à travers le tube (2), on assure les éléments (3, 4) de décharge de traction à l'égard d'un glissement en arrière dans le tube d'acier (2).

2. Procédé selon la revendication 1, caractérisé par le fait que l'on munit les éléments de décharge de traction, à leurs extrémités, de noeuds en forme de huit (5, 6).

3. Procédé selon la revendication 1, caractérisé par le fait qu'à son extrémité on réunit un élément (3, 4) de décharge de traction avec l'autre élément respectif de décharge de traction.

4. Procédé selon la revendication 3, caractérisé par le fait que les éléments de décharge de traction sont munis d'une agrafe.

5. Procédé selon l'une des revendications 1 à 4, caractérisé par le fait que les éléments de décharge de traction sont constitués d'un plastique flexible, armé de fibres de verre.
